# EUROPEAN PATENT APPLICATION

(11) **EP 3 566 623 A1**
(43) Date of publication of application: **13.11.2019**
(21) Application number: 18171938.6
(22) Date of filing: 11.05.2018
(51) Int. Cl.: A47J 27/00

(54) **APPARATUS AND METHOD FOR TREATING FOODSTUFF**

(71) Applicant: Koninklijke Philips N.V., 5656 AE Eindhoven (NL)
(72) Inventor: Chen, Yun, 5656 AE Eindhoven (NL); Tan, Jingwei, 5656 AE Eindhoven (NL); Lu, Weihua, 5656 AE Eindhoven (NL)
(74) Representative: de Haan, Poul Erik

(57) **Abstract**

Disclosed is an apparatus for treating foodstuff while at least partially being immersed in a liquid. The apparatus includes a pH adjusting system and a temperature adjusting system. The apparatus further includes an interface configured to provide the user with two or more selectable treatment options for the treatment of the foodstuff. Each of the treatment options corresponds to a different setting for controlling the pH level and/or the temperature so that each of the treatment options represents a different predefined property of the foodstuff after the treatment. The interface is further configured to allow the user to select a treatment option corresponding to a combination of the predefined properties. A controller is configured to control the temperature and/or the pH level so that the combination of the predefined properties is obtained using a setting stored in the controller which balances between the settings of the combined predefined properties.

## Description

### FIELD OF THE INVENTION

The present invention relates to an apparatus and a method for treating foodstuff immersed in a liquid, such as water. Specifically, the present invention relates to an apparatus and a method for treating foodstuff according pH level and temperature conditions which are determined depending on user input which relates to a combination of predefined treatment results.

### BACKGROUND OF THE INVENTION

Vegetables and fruits are rich sources of essential vitamins, minerals, fibers and disease-fighting phytochemicals which the human body needs to maintain health. Some vegetables can be taken raw but most are commonly cooked before being consumed. Generally, preparations of vegetables at home are based on taste preference and convenience rather than retention of nutrient and health-promoting compounds.

However, use of steam cooking utensils, such as vegetable steamers, has grown in recent years due to the ever growing health consciousness of the population. Cooking food using steam has numerous benefits. Specifically, in contrast to conventional boiling processes, steaming of food allows avoidance of significant losses of vitamin C and degradation of chlorophyll. Vitamin C is an antioxidant, potentially protecting cells from oxidative damage caused by free radicals. Additionally, vitamin C is involved in the normal structure and function of blood vessels and neurological function and assists in the defense against infections and inflammation. Retaining the chlorophyll content prevents food from loosing its green color.

On the other hand, when vegetables are steamed, salt must be added to the vegetables after the cooking process, since salt does not evaporate and the food does not come in contact with the water. Likewise, most flavors cannot be absorbed by the steamed vegetables, since these flavors don't evaporate.

Therefore, a need exists for providing an apparatus and a method for an improved treatment of foodstuff immersed in a liquid, in particular for an apparatus and a method which allows improved boiling of foodstuff such as vegetables.

### SUMMARY OF THE INVENTION

Embodiments of the present invention provide an apparatus for treating foodstuff while at least partially being immersed in a liquid. The apparatus comprises a vessel for receiving the foodstuff and the liquid. The apparatus further comprises a pH adjusting system for adjusting a pH level of the liquid and/or a pH level of the foodstuff. The apparatus further comprises a temperature adjusting system for adjusting a temperature of the liquid and/or a temperature of the foodstuff. The apparatus further comprises an interface which is configured to provide the user with two or more selectable treatment options for the treatment of the foodstuff. Each of the treatment options corresponds to a different setting for the pH level and the temperature which is stored in a data storage system of the apparatus, wherein each of the treatment options represents a different predefined property of the foodstuff after the treatment. The interface is further configured to allow the user to select a treatment option corresponding to a combination of at least two of the predefined properties. The apparatus further comprises a controller which is configured to control the temperature and the pH level so that the combination of the predefined properties is obtained using a setting stored in the data storage system which balances between the settings of the predefined properties which are combined.

The foodstuff may include vegetables, fruits and/or grains, such as rice. The treatment of the foodstuff may include one or a combination of boiling, poaching, simmering, stewing and/or blanching. The liquid may be water or substantially water. The liquid may comprise water as a primary constituent.

One or more of the predefined properties may be organoleptic properties of the foodstuff, i.e. properties that an individual experiences via the senses. Additionally or alternatively, one or more of the predefined properties may be chemical properties of the foodstuff.

The interface may include one or more user-operable, in particular manually-operable interface elements, such as one or more switches and/or one or more buttons. The manually-operable interface elements may be provided using a keypad and/or a touch screen. In alternative embodiments, the interface is accessible by an input device, which may be, for example, a cellular phone of the user. Each of the treatment options may be selectable using the manually-operable interface elements. The controller may be configured to read, depending on the selected treatment option, a setting from a plurality of settings stored in a data storage system of the controller so that the read-out setting corresponds to the selected treatment option. Each of the settings may include one or more values for a temperature and/or a pH level of the foodstuff and/or the liquid. The setting may include further parameters, such as a treatment time.

The interface may further be configured for allowing the user to select a class from a plurality of classes of foodstuff. Examples of such classes may be "spinach", "carrots" and "broccoli". The plurality of classes may be associated with different types of foodstuff, which are to be treated. Each of the settings may be associated with a class of foodstuff which is selectable by the user.

At least a portion of the vessel may be made of a heat conductive material, such as metal. A holding capacity of the vessel may be larger than 0.5 liter, larger than 1 liter or larger than 1.5 liter. The holding capacity may be less and then 2,000 liter or less than 1,000 liter or less than 200 liter or less than 100 liter. The vessel may include an opening for supplying the foodstuff and/or the liquid to the vessel and/or for removing the foodstuff and/or the liquid from the vessel. The vessel may be in the form of a bowl.

The pH adjusting system may be configured to adjust the pH level of the liquid within an accuracy of +/- 1 pH or within an accuracy of +/- 0.5 pH, or within an accuracy of +/- 0.3 pH. The pH adjusting system may be configured to adjust the pH level of the liquid and/or the pH level of the foodstuff when contained in the vessel and/or before being supplied to the vessel.

The pH adjusting system may include a pH sensor for sensing a pH level of the liquid and/or a pH level of the foodstuff. The pH sensor may be in signal communication with the controller. The controller may be configured to control the pH adjusting system so as to adjust the pH level of the liquid depending on the sensed pH level. The pH sensor of the pH adjusting system may be located inside the vessel and/or outside the vessel. By way of example, the pH sensor may be configured to sense a pH level of an amount of the liquid to be supplied to the vessel.

According to a further embodiment, the pH adjusting system is configured to perform an electrolysis of at least a portion of the liquid for adjusting the pH level. The electrolysis may be performed using an electrolysis cell. The electrolysis cell may include an anode chamber and a cathode chamber. The anode chamber and the cathode chamber may be separated by an ion-conductive membrane.

According a further embodiment, the pH adjusting system is configured to adjust a conductivity of at least a portion of the liquid for performing the electrolysis. The conductivity may be adjusted by adding a salt, in particular a neutral salt, such as sodium chloride (NaCl) at least to a portion of the liquid which is supplied to the electrolysis cell.

According to a further embodiment, at least one of the predefined properties, which are combined, is indicative of: (a) a color of the foodstuff; (b) a content of a micronutrient contained in the foodstuff; and/or (c) a firmness of a texture of the foodstuff.

According to a further embodiment, the setting of at least one of the predefined properties is configured to provide an increased heat stability of an enzyme during the treatment, compared to at least one or all of the remaining settings of the predefined properties. The heat stability may be measured by measuring a residual activity of the enzyme. The enzyme may be involved in an improvement or maintenance of a firmness of a texture of the foodstuff. The setting may be configured to control the temperature to values less than 80 °C or less than 70 °C. The temperature may be greater than 60° C in order to eliminate pathogenic bacteria contained in the foodstuff.

The enzyme may be an endogenous enzyme of the foodstuff. The enzyme may be involved in the de-esterification of pectin and formation of pectinates.

According to an embodiment, the enzyme is a pectic enzyme. The pectic enzyme may be pectin methylesterase.

According to a further embodiment, the setting of at least one of the predefined properties is configured to provide a reduced or suppressed degradation of a pigment of the foodstuff during the treatment, compared to at least one or all of the remaining settings of the predefined properties. The degradation may be measured by measuring a reduction of the content of the pigment.

According to an embodiment, the pigment is a chlorophyll pigment. For reducing or suppressing the degradation of the chlorophyll pigment, the setting may be configured to control the temperature to values below 80 °C or below 75 °C or below 70 °C or below 65 °C. The temperature may be greater than 60° C in order to eliminate pathogenic bacteria contained in the foodstuff. Additionally or alternatively, the setting may be configured to control the pH level to values greater than 7 or greater than 8. The pH level may be less than 9.

According to a further embodiment, the setting of at least one of the predefined properties is configured to provide a reduced or suppressed degradation of a micronutrient of the foodstuff during the treatment, compared to at least one or all of the remaining settings of the predefined properties. The degradation may be measured by measuring a reduction of the content of the micronutrient.

According to a further embodiment, the micronutrient is vitamin C.

According to a further embodiment, the setting of at least one of the predefined properties is configured to reduce or suppress a stability of ascorbate oxidase, compared to at least one or all of the remaining settings of the predefined properties. The stability may be measured by measuring a residual activity of the ascorbate oxidase. For reducing the stability of ascorbate oxidase, the setting may be configured so that the temperature is controlled to values greater than 60 °C or greater than 65 °C. Additionally or alternatively, the setting may be configured to control the pH level to values lower than 5 or lower than 4.5. The pH level may be greater than 4.

According to a further embodiment, the interface comprises, for each of the treatment options, an activatable user interface element. The interface is configured so that the treatment option, which corresponds to the combination of the predefined properties, is selectable using an activation of the user interface elements of the treatment options of the combined predefined properties. The user interface elements may be manually-operable user interface elements. The user interface elements may be activatable independently from each other. The interface elements may be provided using a graphical user interface.

According to a further embodiment, the apparatus includes a container for receiving the liquid. The container may be in fluid communication with the vessel for supplying the liquid from the container to the vessel. The pH adjusting system may be configured to adjust the pH level of the liquid when being contained in the container. The temperature adjusting system may be configured to adjust the temperature level of the liquid when being contained in the container.

According to a further embodiment, the apparatus includes an amount determining system configured to measure an amount of the foodstuff. The apparatus may be configured to determine an amount of the liquid to be supplied to the vessel depending on the measured amount of the foodstuff.

According to a further embodiment, the amount of the liquid is further determined depending on one or more of the treatment options which are selected by the user.

According to a further embodiment, the amount determining system comprises a weighing system which is configured to determine a weight of the foodstuff when contained in the vessel.

Embodiments of the present disclosure provide a method of treating foodstuff while at least partially being immersed in a liquid. The method comprises receiving, via an interface, user input, wherein the interface is configured to provide the user with two or more selectable treatment options for the treatment of the foodstuff. Each of the treatment options may correspond to a different setting for controlling, using a controller, a pH level and/or a temperature of the liquid and/or of the foodstuff, wherein each of the treatment options represents a different predefined property of the foodstuff after the treatment. The interface may further be configured to allow the user to select a treatment option corresponding to a combination of at least two of the predefined properties. The method may further comprises controlling, using the controller, the temperature and/or the pH level so that the combination of the predefined properties is obtained using a setting stored in the data storage system which balances between the settings of the predefined properties which are combined.

### BRIEF DESCRIPTION OF THE DRAWINGS

Fig. 1 is a schematic illustration of an apparatus for treating foodstuff according to an exemplary embodiment;
Fig. 2 is a schematic illustration of a graphical user interface of the apparatus for treating foodstuff, which is illustrated in Fig. 1;
Fig. 3 is as a schematic illustration of a pH adjusting system of the apparatus for treating foodstuff, which is illustrated in Fig. 1;
Fig. 4A is a chart illustrating the thermal degradation of chlorophyll *a*, wherein the chart is used for determining a setting of a treatment option in the apparatus for treating foodstuff according to the exemplary embodiment, which is illustrated in Fig. 1;
Fig. 4B is a chart illustrating the degradation of chlorophyll *a* under different pH conditions, wherein the chart is used for determining a setting of a treatment option in the apparatus for treating foodstuff, which is illustrated in Fig. 1;
Fig. 5 is a chart illustrating the heat stability of pectin methylesterase, wherein the chart is used for determining a setting of a treatment option in the apparatus for treating foodstuff, which is shown in Fig. 1;
Fig. 6A is a chart illustrating the effect of temperature on the activity of ascorbate oxidase, wherein the chart is used for determining a setting of a treatment option of the apparatus for treating foodstuff, which is shown in Fig. 1; and
Fig. 6B shows a chart illustrating the effect of pH on ascorbate oxidase, wherein the chart is used for determining a setting of a treatment option of the apparatus for treating foodstuff, which is illustrated in Fig. 1.

### DETAILED DESCRIPTION OF THE EMBODIMENTS

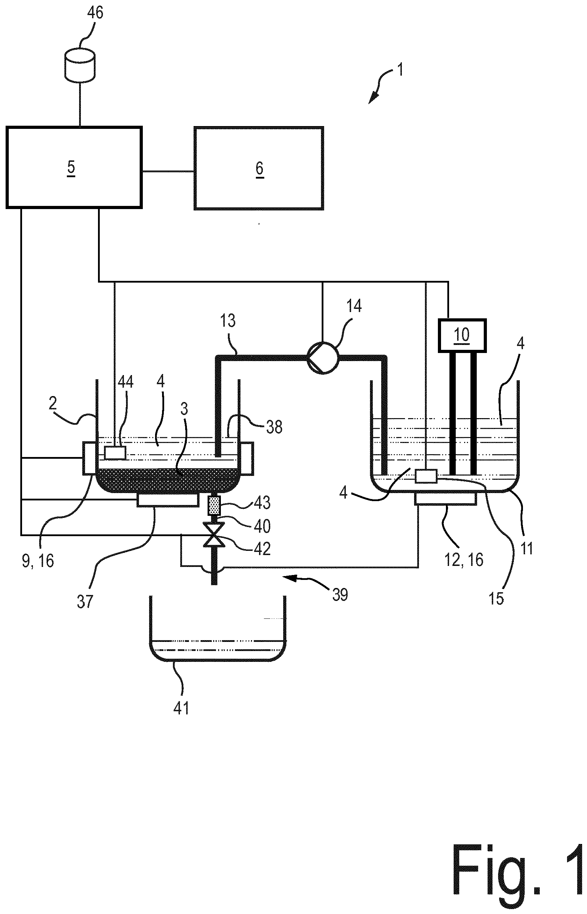

Fig. 1 is a schematic illustration of an apparatus 1 according to an exemplary embodiment for treating foodstuff 3 using a liquid 4. The apparatus 1 of the exemplary embodiment is, for example, configured for treating vegetables and/or fruits. However, it is also conceivable that, additionally or alternatively, other kinds of foodstuff can be treated using the apparatus 1. The liquid 4 which is preferably used for treating the foodstuff 3 is water or has water was a primary constituent. During the treatment process, the foodstuff 3 is contained in a vessel 2 of the apparatus 1 and is at least partially immersed in the liquid 4. Thereby, the treatment process may include boiling, poaching, simmering, stewing and/or blanching.

In order to control the treatment process, the apparatus 1 comprises a temperature adjusting system 16 for adjusting a temperature, which may be a temperature of the liquid 4 and/or a temperature of the foodstuff 3. The temperature adjusting system 16 includes a first heater 9 which is in heat conductive communication with the content of the vessel 2 in order to keep the liquid 4 and the foodstuff 3 contained in the vessel at a required temperature level. The apparatus further includes a pH adjusting system 10 which is configured to adjust a pH level of the liquid 4 before being supplied to the vessel 2. To this end, the apparatus 1 includes a liquid reservoir tank 11 which is in fluid communication with the vessel 2 and the pH adjusting system 10 is configured to adjust the pH level of the liquid when contained in the liquid reservoir tank 11. The temperature adjusting system 16 further includes a second heater 12 which is in heat conductive communication with the content of the liquid reservoir tank 11.

Using the pH adjusting system 10 and the second heater 12, the temperature and pH level of the liquid 4 contained in the liquid reservoir tank 11 are adjustable to required levels before being supplied to the vessel 2 via a supply line 13. The liquid is supplied from the reservoir tank 11 to the vessel 2 using a pump 14 for generating a flow of the liquid through the supply line 13. The apparatus 1 may include a first sensor unit 15 for measuring a temperature and/or a pH level of the liquid 4 contained in the liquid reservoir tank 11. Additionally or alternatively, the apparatus 1 includes a second sensor unit 44 for measuring a temperature and/or a pH level of the liquid 4 contained in the vessel 2. The sensor units 15, 44, the pH adjusting system 10 and the temperature adjusting system 16 are in signal communication with a controller 5 of the apparatus. The controller 5 is configured to control the pH adjusting system 10 and the temperature adjusting system 16 depending on control signals received from the sensor units 15 and/or 44.

However, it is also conceivable that at least a portion of the pH adjusting system 10 and/or at least a portion of the temperature adjusting system 16 are provided in a supply line (not illustrated) for supplying the liquid to the vessel. In such a configuration, the reservoir tank 15 may be omitted.

The adjustment of the temperature and the pH level of the foodstuff 3 and the liquid 4 during the treatment of the foodstuff 3 allows obtaining a plurality of different predefined properties of the foodstuff after the treatment process, depending on the setting used for controlling the pH adjusting system 10 and the temperature adjusting system 16.

The controller 5 is in signal communication with an electronic data storage system 46 for storing a plurality of different settings which are used to control the temperature adjusting system and the pH adjusting system. Each of the settings corresponds to a treatment option which is selectable by the user using a user interface 6 of the apparatus 1, wherein each of the settings corresponds to a different predefined property of the foodstuff after the treatment process.

One or more of the predefined properties may correspond to organoleptic properties, such as "retention of green color" and "retention of texture". Additionally or alternatively, one or more of the predefined properties may correspond to a chemical property, such as "retention of vitamin C". Depending on the selected treatment option, the controller 5 selects the corresponding setting from the plurality of settings stored in the data storage system 46 of the controller 5. Then, the controller 5 controls the temperature adjusting system 16 and the pH adjusting system 10 so that the pH level and temperature correspond to the setting. It has been shown that such a configuration of the user interface allows easy and efficient use of the apparatus for treating the foodstuff.

In the apparatus 1 according to the exemplary embodiment, a first setting which is stored in the data storage system 46, is configured to reduce the degradation of chlorophyll pigments contained in the foodstuff. This, for example, allows, as a first predefined property, preservation of the natural color of green vegetables, such as broccoli, spinach, cabbage, lettuce and celery. A second setting, which is stored in the data storage system 46, is configured to reduce the degradation of vitamin C contained in the foodstuff. This allows, as a second predefined property, preservation of a higher portion of vitamin C contained in the foodstuff. Further, a third setting, which is stored in the data storage system 46, is configured so that during the treatment process, an activity of pectin methylesterase is at least partially maintained. Since pectin methylesterase is involved in the de-esterification of pectin and formation of pectinates, this, as a third predefined property, at least partially retains the firm texture of the foodstuff.

Each of these settings represents a treatment option, which, as will be described in more detail below, is selectable by the user using the interface 6 of the apparatus 1. In the exemplary embodiment, the interface 6 is configured as a graphical user interface which may be presented on a touch-sensitive display screen. However, it will be appreciated that other configurations may be utilized for the interface 6. By way of example, the interface 6 may be configured to be accessible by an external input device, such as a cellular phone of the user.

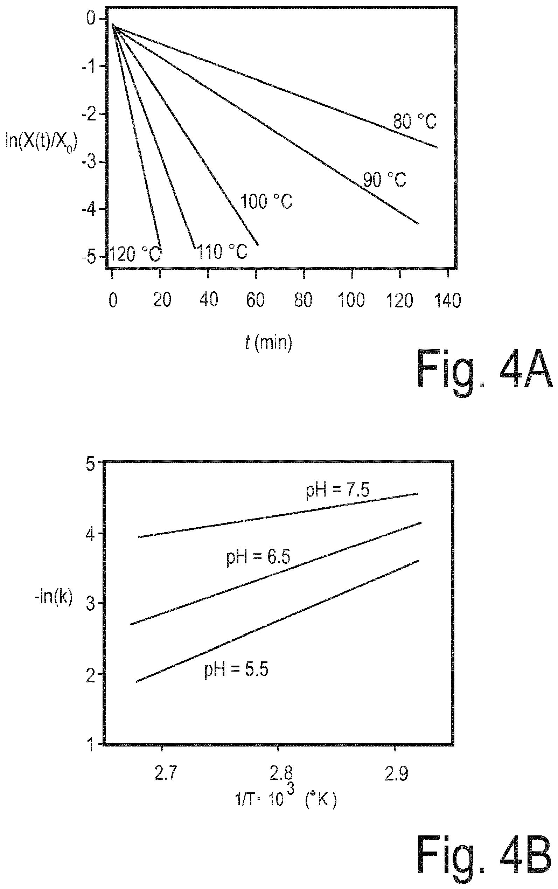

Fig. 4A is a curve chart schematically illustrating the thermal degradation of chlorophyll *a*. The diagram shows the time dependency of In (X(t)/X₀), wherein X₀ represents the chlorophyll *a* concentration at an initial time t=0 and X (t) represents the chlorophyll *a* concentration at a time t. As can be seen from Fig. 4A, the thermal degradation of chlorophyll *a* decreases with decreasing temperatures *T* (measured in degrees Celsius). A similar dependency exists for chlorophyll *b*. Based on this relationship, the temperature setting for better retaining the natural green color of the foodstuff is configured so that the temperature is below 80 °C, or below 75 °C, or below 70 °C. The temperature may be greater than 60° C or greater than 65 °C in order to eliminate pathogenic bacteria contained in the foodstuff and to retain more content of vitamin C in the foodstuff.

Fig. 4B is a curve chart schematically illustrating Arrhenius plots of chlorophyll *a* degradation, wherein *k* represents the first-order rate constant for the degradation process and *T* represents the temperature measured in Kelvin. As can be seen from the chart of Fig. 4B, low pH levels favor the degradation process of chlorophyll *a*. A similar relationship exists for chlorophyll *b.* Based on this relationship, the setting for the predefined property "retention of green color" is configured so that the pH level is controlled to be greater than 7, or greater than 8. The pH level may be less than 9.

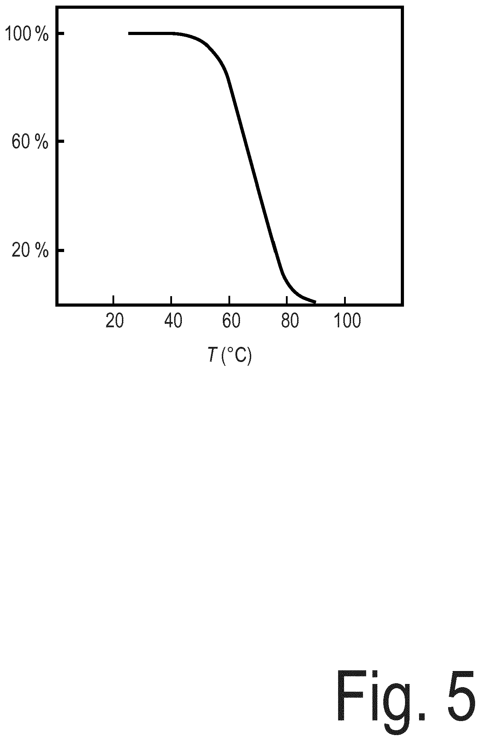

In the apparatus according to the exemplary embodiment, for retaining the texture of the foodstuff in order to obtain the predefined property "retention of firm texture", the controller uses a setting which is based on the temperature dependency of the activity of pectin methylesterase, as is illustrated in Fig. 5. Fig. 5 shows a curve chart illustrating the residual activity of pectin methylesterase (expressed in per cent of the maximum value) after exposing the enzyme to different temperatures *T* (measured in degrees Celsius) for a time period of 1 minute. The curve chart exhibits a steep decline of the residual activity in a temperature range of between 50°C and 90°C. Based on these features of the heat stability of pectin methylesterase, the setting for the predefined property "retention of firm texture" is configured so that the temperature is controlled to be at most 80 °C during the treatment. The temperature may be greater than 60° C or greater than 65 °C in order to eliminate pathogenic bacteria contained in the foodstuff and to retain more content of vitamin C in the foodstuff.

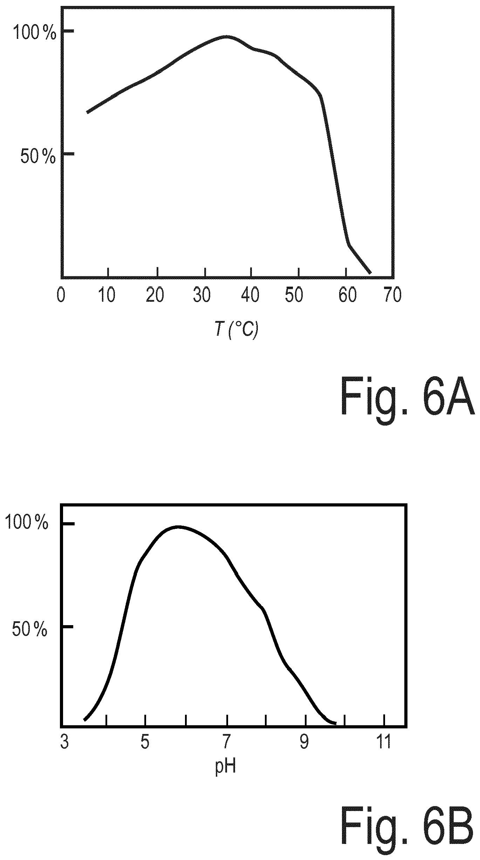

Fig. 6A is a curve chart illustrating the residual activity of ascorbate oxidase (expressed in per cent of the maximum value) after incubation of the ascorbate oxidase for 4 minutes at different temperatures *T* (measured in degrees Celsius). Ascorbate oxidase is an enzyme that catalyzes the oxidation of ascorbic acid to dehydroascorbic acid. It has been shown that selecting a setting which suppresses the activity of the enzyme allows retaining a higher vitamin C content in the foodstuff. Based on the curve chart which is shown in Fig. 6A, the setting for the predefined property "retention of vitamin C" is configured so that the temperature is controlled to be greater than 60 °C, preferably greater than 65 °C.

Fig. 6B is a curve chart illustrating the residual activity of ascorbate oxidase (expressed in per cent of the maximum value) after incubation of the ascorbate oxidase for 4 minutes at different pH levels. Based on the curve chart of Fig. 6B, the setting for the predefined property "retention of vitamin C" is configured so that the pH level is controlled to be less than 5 or less than 4.5, since the activity of ascorbate oxidase decreases with decreasing pH values. The pH level may be greater than 4.

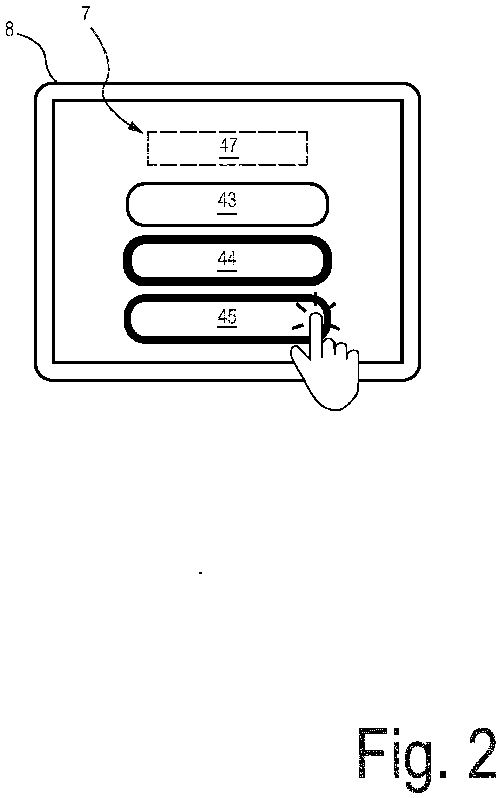

Fig. 2 is a schematic illustration of a portion of the interface 6 (also shown in Fig. 1) for receiving user input to select one of the treatment options. Each of the treatment options correspond to a different predefined property of the foodstuff after treatment. The interface 6 includes a graphical user interface 7 which is displayed on a touch-sensitive display screen 8. The graphical user interface 7 includes three manually-operable interface elements 43, 44, 45, each of which being configured as a button. Each of the interface elements 43, 44, 45 is activatable by the user by pressing a surface area of the touch-sensitive display screen 8, which corresponds to the respective interface element.

Each of the interface elements 43, 44, 45 corresponds to one of the treatment options. By operating one of the interface elements 43, 44, 45 (i.e. by pressing one of the buttons), the user can activate the respective treatment option so that the treatment of the foodstuff is performed using the setting which corresponds to the selected treatment option. Therefore, the user interface elements 43, 44 and 45 are activatable independently from each other.

The graphical user interface may be further configured to show a label 47 indicating a class of the foodstuff to be treated. Examples of such classes may be "spinach", "carrots" and "broccoli". Fig. 2 shows a state of the graphical user interface in which the user can select a treatment option from a plurality of treatment options for the class of foodstuff which is displayed in the label 47. The interface may be configured for allowing the user to select the class from a plurality of predefined classes of foodstuff. Each of the settings of the predefined treatment options, which are stored in the storage system, may be associated with a class of foodstuff which is selectable by the user.

The graphical user interface 7 is further configured to allow the user to select a treatment option for obtaining a combination of at least two of the predefined properties (i.e. a combination of the predefined properties "retention of vitamin C", "retention of firm texture" and "retention of green color"). By way of example, as is illustrated in Fig. 2, in response to an activation of the buttons "retention of firm texture" and "retention of vitamin C", the controller selects a setting from the settings stored in the data storage system, which is configured so that after the treatment procedure, the green color as well as the firm texture of the foodstuff are retained to a high degree. Therefore, activation of the interface elements 43, 44 and 45 can be combined to define a combination of at least two of the predefined properties.

It has been shown that it is possible to provide a setting for a combination of the predefined properties by balancing the settings of the predefined properties which are combined. Specifically, in order to perform a treatment process which combines the predefined properties "retention of vitamin C" and "retention of firm texture", a setting is used which is stored in the data storage system and which is determined based on the heat stability of pectin methylesterase, as illustrated by the curve chart shown in Fig. 5, the effect of heat on ascorbate oxidase, as illustrated by the curve chart shown in Fig. 6A, and the effect of different pH levels on the activity of ascorbate oxidase, as illustrated by the curve chart shown in Fig. 6B.

Specifically, the setting for this combination of predefined properties is configured so that the pH level is controlled to be less than 5 or less than 4.5. The pH level may be greater than 4. Further, the temperature is controlled to be within a range of between 65 °C and 80 °C or within a range of between 70 °C and 80 °C. Therefore, the temperature range represents a balance between the preferred temperature range for retaining vitamin C content (i.e. the temperature should be greater than 60 °C, preferably greater than 65 °C) and the preferred temperature range for retaining the firm texture of the foodstuff (i.e. lower temperatures in a range of less than 80°C are preferred).

In order to perform a treatment process which combines the predefined properties "retention of vitamin C" and "retention of green color", a setting is used which is stored in the data storage system and which is determined based on the effect of heat on the activity of ascorbate oxidase, as illustrated by the curve chart in Fig. 6A, the effect of different pH levels on the activity of ascorbate oxidase, as illustrated by the curve chart of Fig. 6B, the thermal degradation of chlorophyll, as is illustrated for chlorophyll *a* by the curve chart in Fig. 4A and the pH-dependent degradation of chlorophyll, as is illustrated for chlorophyll *a* by the curve chart of Fig. 4B.

Specifically, the setting for this combination of predefined properties is configured so that the pH level is controlled to be less than 5 or less than 4.5. The pH level may be greater than 4. Further, the temperature is controlled to be within a range of between 60 °C and 80 °C or within a range of between 65 °C and 80 °C, or within a range of between 70 °C and 80 °C, or within a range of between 75 °C and 80 °C. Therefore, the temperature range represents a balance between the preferred temperature range for retaining vitamin C content (i.e. the temperature should be greater than 60 °C, preferably greater than 65 °C) and the preferred temperature range for retaining the green color of the foodstuff (i.e. lower temperatures in a range of less than 80°C are preferred).

In order to perform a treatment which combines the predefined properties "retention of firm texture" and "retention of green color", a setting is used which is stored in the data storage system and which is determined based on the heat stability of pectin methylesterase illustrated by the curve chart illustrated in Fig. 5, the thermal degradation of chlorophyll, as is illustrated for chlorophyll *a* by the curve chart of Fig. 4A and the pH-dependent degradation of chlorophyll, as illustrated for chlorophyll *a* by the curve chart of Fig. 4B.

Specifically, the setting for this combination of predefined properties is configured so that the pH level is controlled to be greater than 7 or greater than 8. The pH level may be less than 9. Further, the temperature is controlled to be within a range of between 60 °C and 80 °C, or within a range of between 70 °C and 80 °C. Choosing a lower temperature limit which is greater than 60 °C or greater than 64 °C is more efficient in eliminating pathogenic bacteria contained in the foodstuff and retains more vitamin C (as can be seen from the curve chart of Fig. 6A).

It has been shown that thereby, an apparatus for treating foodstuff is provided which allows the user to easily select combinations of predefined properties of the foodstuff. The proposed apparatus therefore provides more flexibility and easy handling when preparing foodstuff.

The graphical user interface is further configured for allowing the user to select a class from a plurality of classes of foodstuff. Examples of such classes may be "spinach", "carrots" and "broccoli". The plurality of classes may be associated with different types of foodstuff, which are to be treated. Each of the settings of the predefined treatment options may be associated with a class of foodstuff which is selectable by the user. Further, the apparatus 1 may be configured to read the settings from the data storage system depending on the selected class of foodstuff.

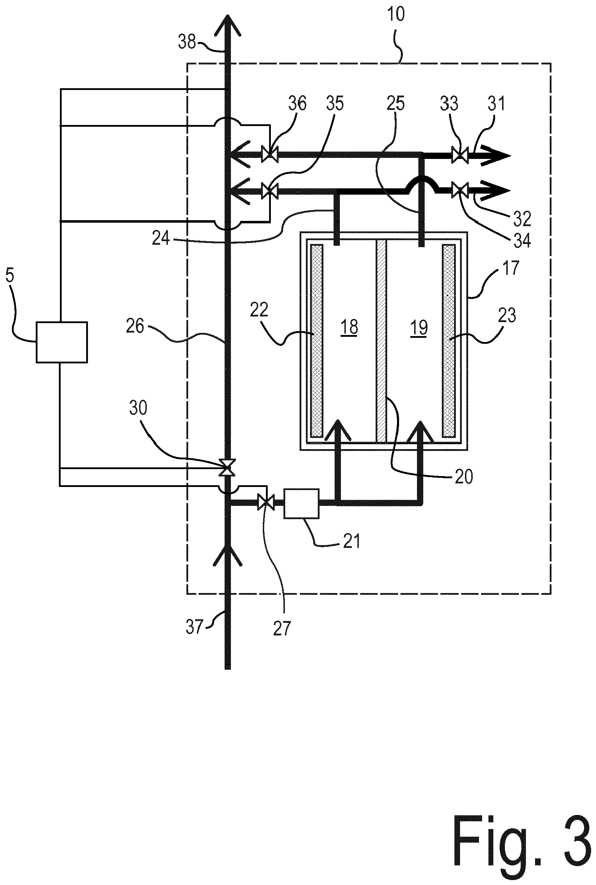

Fig. 3 is a schematic illustration of the pH adjusting system 10 (also shown in Fig. 1) of the exemplary apparatus for treating foodstuff. The pH adjusting system 10 includes an electrolysis cell 17 configured to perform an electrolysis of a portion of the liquid which flows through the electrolysis cell 17. The electrolysis cell 17 has an anode chamber 18 having an anode 22 and a cathode chamber 19 having a cathode 23. The anode chamber 18 and the cathode chamber 19 are separated by an ion-exchange membrane 20 which is permeable to ions.

The pH adjusting system 10 further includes a salt dosing device 21 for introducing an amount of salt, in particular a neutral salt, such as sodium chloride (NaCl) into the liquid, which is supplied to the anode chamber 18 and to the cathode chamber 19. By way of example, the amount of salt is controlled so that in the anode chamber 18 and in the cathode chamber 19, a sodium chloride solution having a concentration of between 1% and 5% or between 1% and 2% is present. A DC voltage between the anode 22 and the cathode 23 is within a range of between 5V and 220V, preferably between 20V and 90V. This may result in a current within a range of between 0.1 and 3 A.

The electrolytic process, which takes place in the electrolysis cell 17 produces an anolyte which is discharged from the anode chamber 18 through an anolyte discharging line 24 and a catholyte, which is discharged from the cathode chamber 19 through a catholyte discharging line 25. Each of the anolyte discharging line 24 and the catholyte discharging line 25 is connected to a bypass line 26 via valves 35 and 36. Further, each of the anolyte discharging line 24 and the catholyte discharging line 25 are connected to a discharge tank or an outlet (not shown in Fig. 3) via valves 33 and 34. Each of the valves 33, 34, 35 and 36 are in signal communication with the controller 5. The bypass line 26 allows a portion of the liquid to bypass the electrolysis cell 17. The amount of the liquid which is fed into the anode chamber 18 and the cathode chamber 19 and the amount of liquid which bypasses the anode chamber 18 and the cathode chamber 19 is controlled using a supply valve 27 and a bypass valve 30 which is disposed in the bypass line 26, each of which being in signal communication with the controller 5. A greater amount of liquid which is supplied through the bypass line 26 causes the pH level of the liquid which is discharged from the pH adjusting system 10 to be closer to the pH level of the liquid which is contained in the reservoir tank 11 (shown in Fig. 1). The controller 5 is configured to control the pH level of the liquid which is discharged from the pH adjusting system 10 into the liquid reservoir tank by controlling the valves 27, 30, 33, 34, 35 and 36 depending on the sensor output of the first sensor unit 15 (shown in Fig. 1) which senses the pH level of the liquid 4 contained in the reservoir tank 11.

If the liquid, which is supplied to the electrolysis cell 17 is mixed with sodium chloride salt, the following chemical reaction occurs at the cathode 23 within the cathode chamber 19:

2H₂O+2e---->H₂(g)+2OH- (1)

The generated hydroxide ions (OH-) make the catholyte alkaline.

On the other hand, in the anode chamber 18, the following chemical reactions occur, which produce chlorine (Cl₂), oxygen (O₂), as well as hydroxonium ions which make the anolyte acidic:

6H₂O ---> O2+4H₃O++4e- (2)

Cl⁻ ---> ½Cl₂(g)+1e⁻ (3)

The chlorine which is generated in the anode chamber 18 dissociates according to the following reaction:

Cl₂+H₂O--->HCl+HClO (4)

The pH adjusting system 10 which has been explained above with reference to Fig. 3 is one of a plurality of possible configurations. By way of example, it is conceivable that the pH adjusting system is configured to add a pH adjuster to the liquid. A pH adjuster may be defined herein as a chemical ingredient configured to adjust the pH level of the liquid.

Returning to Fig. 1, the apparatus 1 of the exemplary embodiment includes an amount determining system which is configured to determine an amount of the liquid 4 to be supplied to the vessel 2 depending on the amount of foodstuff 3 which is to be treated using the liquid. In the exemplary embodiment, the amount determining system is configured to determine the amount of liquid depending on a predefined range of the ratio of the amount of the liquid to the amount of the foodstuff. In the exemplary embodiment, which is shown in Fig. 1, a portion of the amount determining system is implemented within the controller 5. However, it is also conceivable that the amount determining system is a component of the apparatus 1 which is implemented separately from the controller 5.

The amount determining system includes a weighing system 37 which is configured to measure a weight of a content of the vessel 2. In the exemplary embodiment, which is illustrated in Fig. 1, the weighing system 37 has a capacity of up to 3,000 grams. The precision of the weighing system 37 is 0.1 gram.

As has been described above in connection with Fig. 2, the interface 6 is configured to receive user input indicative of a class of the foodstuff. The amount determining system may be configured to determine the amount of the liquid to be used for the treatment process depending on the selected class of foodstuff.

The amount determining system may be further configured to determine the amount of the liquid depending on the treatment option which is selected by the user. In natural plants, many micronutrients, such as vitamin C and folate, are water-soluble. Therefore, in food preparation processes, in which the food is at least partially immersed in water, a leaching out effect occurs (i.e. micronutrients leach out to the water through the food itself), which is a major degradation pathway. When these micronutrients are leached out to the water, they are more easier to be destroyed by heat and oxygen. However, it has been shown that if a predefined property is selected which corresponds to or includes "retention of vitamin C", it is preferable to use a lesser amount of water.

Additionally or alternatively, the amount of liquid may further be determined depending on the treatment process which is to be performed. By way of example, the determined amount of liquid for performing a boiling process may be different compared to the determined amount of liquid for performing a blanching process.

By way of example, if a boiling process is to be performed, the amount of liquid may be determined so that the ratio of the amount of liquid to the amount of the foodstuff is within a range of between 0.7 and 2.3 or within a range of between 1 and 2. Further, if a blanching process is to be performed, the amount of liquid may be determined so that the ratio of the amount of the liquid to the amount of the foodstuff is within a range of between 0.3 and 1.7 or within a range of between 0.5 and 1.5.

It will be appreciated that other configurations of the amount determining system may be utilized. By way of example, additionally or alternatively, the amount determining system may be configured to determine the amount of foodstuff 3 using a measurement of a fill level, in particular a vertical fill level within the vessel 2. Thereby, the amount of the foodstuff measured by the amount determining system may represent an amount in volume. The vertical fill level may be measured using a laser beam for optical distance measurement wherein the laser beam is directed in a downward direction within the vessel 2 toward a surface 38 formed by the foodstuff 3 contained in the vessel 2. Additionally or alternatively, it is further conceivable that the user uses the interface 6 of the apparatus 1 which is in signal communication with the portion of the amount determining system implemented in the controller 5. The interface 6 may be configured for receiving input information indicative of the amount of foodstuff 3 which is to be treated.

After the predetermined time for the treatment process has elapsed, the liquid 4 is discharged from the vessel 2. The apparatus 1 includes a liquid discharging system 39 for discharging the liquid 4 in which the foodstuff 3 was immersed during the treatment process. In the exemplary embodiment, which is shown in Fig. 1, the liquid discharging system 39 is configured as a liquid drainage system having one or more openings in a bottom surface of the vessel 2 which allows discharging the liquid 4 through a discharging line 40 into a drainage tank 41. The discharging process is controlled using a drainage valve 42 which is in signal communication with the controller 5. The vessel 2 may be at least partially arranged within the drainage tank 41.

It is conceivable that one or more pumps are provided for pumping the liquid 4 through the discharging line 40. The liquid drainage system 39 may include a filter 43 that is provided in the discharging line 40 for preventing foodstuff 3 from being discharged through the discharging system 39. Additionally or alternatively, it is conceivable that the liquid discharging system 39 is configured as a liquid suction system, having a suction line extending from above into the vessel 2. The liquid suction system may include a suction pump for suctioning the liquid through the suction pipe.

Therefore, the above-described exemplary apparatus and exemplary method allow a more efficient food preparation which is flexible and easy to use.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the protective scope of the claims of the present invention. In particular, although the invention has been described based on a projection radiograph, it can be applied to any imaging technique which results in a projection image. In the claims, the word "comprising" does not exclude other elements or steps, and the indefinite article "a" or "an" does not exclude a plurality. Any reference signs in the claims should not be construed as limiting the scope.

## Claims

1. An apparatus (1) for treating foodstuff (3) while at least partially being immersed in a liquid (4), the apparatus (1) comprising:
a vessel (2) for receiving the foodstuff (3) and the liquid (4);
a pH adjusting system (10) for adjusting a pH level of the liquid (4) and/or a pH level of the foodstuff (3);
a temperature adjusting system (16) for adjusting a temperature of the liquid (4) and/or a temperature of the foodstuff (3);
an interface (6) which is configured to provide the user with two or more selectable treatment options for the treatment of the foodstuff (3);
wherein each of the treatment options corresponds to a different setting of the pH level and the temperature which is stored in a data storage system (46) of the apparatus (1), wherein each of the treatment options represents a different predefined property of the foodstuff (3) after the treatment;
wherein the interface (6) is further configured to allow the user to select a treatment option corresponding to a combination of at least two of the predefined properties;
wherein the apparatus (1) further comprises a controller (5) which is configured to control the temperature and the pH level so that the combination of the predefined properties is obtained using a setting stored in the data storage system (46) which balances between the settings of the predefined properties which are combined.

2. The apparatus (1) of claim 1, wherein at least one of the combined predefined properties is indicative of:
- a color of the foodstuff (3);
- a content of a micronutrient contained in the foodstuff (3); and/or
- a firmness of a texture of the foodstuff (3).

3. The apparatus (1) of claim 1 or 2, wherein the setting of at least one of the predefined properties is configured to provide an increased heat stability of an enzyme during the treatment, compared to at least one of the remaining settings of the predefined properties;
wherein the enzyme is involved in an improvement or maintenance of a firmness of a texture of the foodstuff.

4. The apparatus (1) of claim 3, wherein the enzyme is a pectic enzyme, in particular pectin methylesterase.

5. The apparatus (1) of any one of the preceding claims, wherein the setting of at least one of the predefined properties is configured to provide a reduced degradation of a pigment of the foodstuff during the treatment, compared to at least one of the remaining settings of the predefined properties.

6. The apparatus (1) of claim 5, wherein the pigment is a chlorophyll pigment.

7. The apparatus (1) of any one of the preceding claims, wherein the setting of at least one of the predefined properties is configured to provide a reduced degradation of a micronutrient of the foodstuff (3) during the treatment, compared to at least one of the remaining settings of the predefined properties.

8. The apparatus (1) of claim 7, wherein the micronutrient is vitamin C.

9. The apparatus (1) of any one of the preceding claims, wherein the setting of at least one of the predefined properties is configured to reduce a stability of ascorbate oxidase during the treatment, compared to at least one of the remaining settings of the predefined properties.

10. The apparatus (1) of any one of the preceding claims, wherein the interface (6) comprises, for each of the treatment options, at least one activatable user interface element (43, 44, 45);
wherein the interface (6) is configured so that the treatment option which corresponds to the combination of the predefined properties is selectable using an activation of the user interface elements of the treatment options of the combined predefined properties.

11. The apparatus (1) of any one of the preceding claims, further comprising a container (11) for receiving the liquid (4), wherein the container (11) is in fluid communication with the vessel (2) for supplying the liquid (4) from the container (11) to the vessel (2);
wherein the pH adjusting system is configured to adjust the pH level of the liquid (4) when being contained in the container (11); and/or
the temperature adjusting system is configured to adjust the temperature level of the liquid (4) when being contained in the container (11).

12. The apparatus (1) of any one of the preceding claims, further comprising an amount determining system configured to measure an amount of the foodstuff (3);
wherein the apparatus (1) is configured to determine an amount of the liquid (4) to be supplied to the vessel (2) depending on the measured amount of the foodstuff (3).

13. The apparatus (1) of claim 12, wherein the amount of the liquid (4) is further determined depending on one or more of the treatment options which are selected by the user.

14. The apparatus (1) of claim 12 or 13, wherein the amount determining system comprises a weighing system (37) which is configured to determine a weight of the foodstuff (3) when contained in the vessel (2).

15. A method of treating foodstuff (3) while at least partially being immersed in a liquid (4), the method comprising:
receiving, via an interface (6), user input, wherein the interface (6) is configured to provide the user with two or more selectable treatment options for the treatment of the foodstuff (3);
wherein each of the treatment options corresponds to a different setting of a pH level and a temperature of the liquid (4) and/or the foodstuff (3) which is stored in a data storage system (46), wherein each of the treatment options represents a different predefined property of the foodstuff (3) after the treatment;
wherein the interface (6) is further configured to allow the user to select a treatment option corresponding to a combination of the predefined properties;
wherein the method further comprises controlling, using the controller (5), the temperature and/or the pH level so that the combination of at least two of the predefined properties is obtained using a setting stored in the data storage system (46) which balances between the settings of the combined predefined properties.
